# EUROPEAN PATENT SPECIFICATION

(11) **EP 4 470 860 B1**
(45) Date of publication and mention of the grant of the patent: **04.03.2026**
(21) Application number: 23177009.0
(22) Date of filing: 02.06.2023
(51) Int. Cl.: B60W 30/18, B60W 50/00, B60W 50/16, B60W 10/04

(54) **ASSISTED PEDAL DRIVE**
UNTERSTÜTZTER PEDALANTRIEB
ENTRAÎNEMENT DE PÉDALE ASSISTÉ

(43) Date of publication of application: 04.12.2024
(73) Proprietor: VOLVO TRUCK CORPORATION, 405 08 Göteborg (SE)
(72) Inventor: JIANG, Bincheng, 412 52 Göteborg (SE); ANDREASSON, Mattias, 412 60 Göteborg (SE)
(74) Representative: Ström & Gulliksson AB

(56) References cited:
- WO-A1-2013/136744
- DE-A1- 102014 009 856
- GB-A- 2 571 325

## Description

### TECHNICAL FIELD

The invention relates generally to propulsion control of vehicles. In particular aspects, the invention relates to assisted pedal drive. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

One-pedal drive, also known as regenerative braking or one-pedal regen, is a concept commonly used in electric vehicles (EVs), but may also be used in vehicles having combustion engines. One-pedal drive allows a driver or operator of a vehicle to control both acceleration and deceleration using a single pedal. Instead of using separate pedals for the accelerator (gas pedal) and brake, the driver can control both functions with the same pedal, usually referred to as the "accelerator pedal" or "drive pedal."

Eco-driving, also known as green driving or fuel-efficient driving, is a concept that promotes driving techniques and habits aimed at minimizing fuel consumption and reducing the environmental impact of vehicles. The primary objective of eco-driving is to achieve optimal energy efficiency and reduce greenhouse gas emissions while maintaining safe and comfortable driving conditions. The importance of eco-driving is ever-increasing and it is common for e.g. logistic companies to educate their drivers in eco-driving.

Education and training of drivers is efficient in spreading the concept of eco-driving, but investing time on training the drivers and perhaps also increasing downtime for vehicles used during training, is costly for companies.

In GB2571325A, a vehicle controller configured to determine a torque output based on different accelerator pedal maps depending on the gradient of the surface the vehicle is traversing is presented. The controller is configured to modify acceleration and deceleration maps based on the gradient. It determines torque output based on the modified maps and an accelerator pedal position relative to a reference position.

### SUMMARY

It is in view of the above considerations and others that the various embodiments of this invention have been made. The present invention therefor recognizes the fact that there is a need for alternatives to (e.g. improvement of) the existing art described above. It is an object of some embodiments to solve, mitigate, alleviate, reduce or eliminate at least some of the above or other disadvantages.

According to a first aspect of the invention, a computer system comprising processing circuitry is presented. The processing circuitry is configured to obtain topography data of a current road segment and an upcoming road segment. The processing circuitry is further configured to determine a topography change between the current road segment and the upcoming road segment, and to determine a maximum propulsion torque based on the topography change. The processing circuitry is further configured to limit, at the current road segment, a torque indicatable by an operator-controlled input of a vehicle based on the maximum propulsion torque. The first aspect of the invention may seek to educate an operator of the vehicle in propelling the vehicle in an eco-friendly manner. A technical benefit may include assisting an operator in propelling the vehicle in a more eco-friendly manner and further to educate the driver on how to propel the vehicle in an eco-friendly manner.

Optionally in some examples, including in at least one preferred example, the processing circuitry is further configured to, responsive to the topography change indicating an uphill change in topography, increase the maximum propulsion torque. A technical effect may include assisting the operator in preventing the vehicle from having to accelerate during the uphill segment, thereby allowing more energy efficient propulsion of the vehicle.

Optionally in some examples, including in at least one preferred example, the processing circuitry is further configured to, responsive to the topography change indicating a downhill change in topography, decrease the maximum propulsion torque. A technical effect may include allowing the operator to benefit from the downhill slope when accelerating and reduces a risk that the vehicle will have to be braked during the downhill slope, thereby allowing more energy efficient propulsion of the vehicle.

Optionally in some examples, including in at least one preferred example, the processing circuitry is further configured to determine a maximum retardation torque based on the topography change and limit, at the current road segment, the torque indicatable by the operator-controlled pedal of the vehicle based on the maximum retardation torque. A technical effect of controlling the retardation torque indicatable by operator controlled may include further increasing the degrees of freedom in assisting the operator in propelling the vehicle in a more eco-friendly manner and further to educate the driver on how to propel the vehicle in an eco-friendly manner.

Optionally in some examples, including in at least one preferred example, the processing circuitry is further configured to, responsive to the topography change indicating an uphill change in topography, decrease the maximum retardation torque. This is beneficial as it assists the operator of the vehicle in preventing having to accelerate during the uphill segment, thereby allowing more energy efficient propulsion of the vehicle.

Optionally in some examples, including in at least one preferred example, the processing circuitry is further configured to, responsive to the topography change indicating a downhill change in topography, increase the maximum retardation torque. A technical effect may include allowing the operator to benefit from the downhill slope when accelerating and reduces a risk that the vehicle will have to be braked during the downhill slope, thereby allowing more energy efficient propulsion of the vehicle.

Optionally in some examples, including in at least one preferred example, the processing circuitry is further configured to obtain a current speed of the vehicle and a speed limit of the current road segment; and determine the maximum propulsion torque based on a difference between the current speed of the vehicle and the speed limit of the current road segment. This is beneficial as it decreases a risk that the operator will e.g. accelerate the vehicle too much if there is a small difference between the current speed of the vehicle and the speed limit of the current road segment.

Optionally in some examples, including in at least one preferred example, the operator-controlled input is a pedal of the vehicle, preferably an accelerator of the vehicle. This is beneficial as a pedal is the common operator-controlled input utilized with one-pedal drive.

Optionally in some examples, including in at least one preferred example, the processing circuitry is further configured to limit the torque indicatable by the operator-controlled input by controlling a haptic feedback of the operator-controlled input. A technical effect may include providing tangible feedback to the operator further assisting the operator in propelling the vehicle in a more eco-friendly manner and further educates the driver on how to propel the vehicle in an eco-friendly manner.

Optionally in some examples, including in at least one preferred example, the processing circuitry is further configured to, responsive to the topography change indicating an uphill change in topography, increase the maximum propulsion torque; responsive to the topography change indicating a downhill change in topography, decrease the maximum propulsion torque; determine a maximum retardation torque based on the topography change; limit, at the current road segment, the torque indicatable by the operator-controlled pedal of the vehicle based on the maximum retardation torque; responsive to the topography change indicating an uphill change in topography, decrease the maximum retardation torque; responsive to the topography change indicating a downhill change in topography, increase the maximum retardation torque; obtain a current speed of the vehicle and a speed limit of the current road segment; determine the maximum propulsion torque based on a difference between the current speed of the vehicle and the speed limit of the current road segment; and limit, at the current road segment, the torque indicatable by the operator-controlled input by controlling a haptic feedback of the operator-controlled input; wherein the operator-controlled input is a pedal of the vehicle, preferably an accelerator of the vehicle.

According to a second aspect of the invention, a vehicle comprising the computer system of the first aspect is presented.

Optionally in some examples, including in at least one preferred example, the vehicle is a heavy-duty vehicle.

According to a third aspect of the invention, a computer implemented method is presented. The method comprises obtaining, by a processing circuitry of a computer system, topography data of a current road segment and an upcoming road segment and determining, by the processing circuitry of the computer system, a topography change between the current road segment and the upcoming road segment. The method further comprises determining, by the processing circuitry of the computer system, a maximum propulsion torque based on the topography change; and limiting, at the current road segment, by the processing circuitry of the computer system, a torque indicatable by an operator-controlled input of a vehicle based on the maximum propulsion torque. The third aspect of the invention may seek to educate an operator of the vehicle in propelling the vehicle in an eco-friendly manner. A technical benefit may include assisting an operator in propelling the vehicle in a more eco-friendly manner and further to educate the driver on how to propel the vehicle in an eco-friendly manner.

Optionally in some examples, including in at least one preferred example, computer implemented method further comprises, responsive to the topography change indicating an uphill change in topography, increasing, by the processing circuitry of the computer system, the maximum propulsion torque. This is beneficial as it assists the operator in preventing the vehicle from having to accelerate during the uphill segment, thereby allowing more energy efficient propulsion of the vehicle.

Optionally in some examples, including in at least one preferred example, the computer implemented method further comprises, responsive to the topography change indicating a downhill change in topography, decreasing, by the processing circuitry of the computer system, the maximum propulsion torque. This is beneficial as it allows the operator to benefit from the downhill slope when accelerating and reduces a risk that the vehicle will have to be braked during the downhill slope, thereby allowing more energy efficient propulsion of the vehicle.

Optionally in some examples, including in at least one preferred example, the computer implemented method further comprises determining, by the processing circuitry of the computer system, a maximum retardation torque based on the topography change; and limiting, at the current road segment, by the processing circuitry of the computer system, the torque indicatable by the operator-controlled input of the vehicle based on the maximum retardation torque. Controlling the retardation torque indicatable by operator controlled input is beneficial as it further increases the degrees of freedom in assisting the operator in propelling the vehicle in a more eco-friendly manner and further educates the driver on how to propel the vehicle in an eco-friendly manner.

Optionally in some examples, including in at least one preferred example, the computer implemented method further comprises, responsive to the topography change indicating an uphill change in topography, decreasing, by the processing circuitry of the computer system, the maximum retardation torque. This is beneficial as it assists the operator of the vehicle in preventing having to accelerate during the uphill segment, thereby allowing more energy efficient propulsion of the vehicle.

Optionally in some examples, including in at least one preferred example, the computer implemented method further comprises, responsive to the topography change indicating a downhill change in topography, increasing, by the processing circuitry of the computer system, the maximum retardation torque. This is beneficial as it allows the operator to benefit from the downhill slope when accelerating and reduces a risk that the vehicle will have to be braked during the downhill slope, thereby allowing more energy efficient propulsion of the vehicle.

According to a third aspect of the invention, a computer program product is presented. The computer program product comprises instructions for performing, when executed by the processing circuitry, the method of the second aspect.

According to a third aspect of the invention, a non-transitory computer-readable storage medium is presented. The non-transitory computer-readable storage comprises instructions, which when executed by the processing circuitry, cause the processing circuitry to perform the method of the second aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** is an exemplary side view of a vehicle according to an example.
**FIG. 1B** is an exemplary block diagram of a vehicle according to an example.
**FIG. 2** is an exemplary block diagram of a computer system according to an example.
**FIG. 3** is an exemplary block diagram of eco-driving data according to an example.
**FIG. 4** is an exemplary block diagram of a computer system according to an example.
**FIG. 5** is an exemplary driving scenario graphically illustrating changes of parameters and data according to an example.
**FIG. 6** is an exemplary driving scenario graphically illustrating changes of parameters and data according to an example.
**FIG. 7** is a block diagram of a method according to an example.
**FIG. 8** is a block diagram of a method according to an example.
**FIG. 9** is a block diagram of a pedal drive circuitry according to an example.
**FIG. 10** is a schematic view of a computer readable storage-medium and a computer program product according to an example.
**FIG. 11** is a schematic diagram of an exemplary computer system for implementing examples disclosed herein, according to an example

### DETAILED DESCRIPTION

The detailed description set forth below provides information and examples of the disclosed technology with sufficient detail to enable those skilled in the art to practice the disclosure.

Hereinafter, certain embodiments will be described more fully with reference to the accompanying drawings. The invention described throughout this disclosure may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The term "coupled" is defined as connected, although not necessarily directly, and not necessarily mechanically. Two or more items that are "coupled" may be integral with each other. The terms "a" and "an" are defined as one or more unless this disclosure explicitly requires otherwise. The terms "substantially", "approximately", and "about" are defined as largely, but not necessarily wholly what is specified, as understood by a person of ordinary skill in the art. The terms "comprise" (and any form thereof, such as "comprises" and "comprising"), "have" (and any form thereof, such as "has" and "having", "include" (and any form thereof, such as "includes" and "including") and "contain" (and any form thereof, such as "contains" and "containing") are open-ended linking verbs. As a result, a method that "comprises", "has", "includes" or "contains" one or more steps possesses those one or more steps, but is not limited to possessing only those one or more steps.

As mentioned above, the primary objective of eco-driving is to achieve optimal energy efficiency and reduce greenhouse gas emissions while maintaining safe and comfortable driving conditions. To this end, eco-driving generally comprises smooth acceleration and braking since rapid acceleration and harsh braking generally lead to increased fuel consumption. Eco-driving encourages gradual acceleration and deceleration (retardation), allowing the vehicle to reach a steady speed more efficiently. Eco-driving generally promotes maintaining a consistent speed in order to avoid unnecessary speed fluctuations. Consistent speeds contribute to better fuel efficiency by reducing energy waste caused by constant acceleration and deceleration. Further, anticipation of a traffic flow may increase fuel efficiency. By observing the road ahead of the vehicle and anticipating traffic conditions, eco-drivers may adjust their driving style accordingly. This avoids sudden stops and enables the utilization of momentum from downhill slopes while minimizing idle time. Eco-driving may also relate to optimal gear shifting. Shifting to higher gears at appropriate times and maintaining engine revolutions per minute (RPM) within a recommended range may improve fuel efficiency. This generally involves an understanding of the vehicle's gear ratios and engine performance.

In order to comfortably operate a vehicle, in particular a heavy-duty vehicle, it is common to have the vehicle provided with a one-pedal drive functionality. One-pedal drive generally works during acceleration, e.g. when the driver depresses the accelerator pedal, for allowing a propulsion source of the vehicle (electric motor, combustion engine, kinetic energy recovery system (KERS), etc.) to deliver power to the wheels, thereby propelling the vehicle forward. This is similar to the traditional gas pedal function. When the driver releases pressure on the accelerator pedal or the drivers' foot is entirely released, a propulsion source may operate in a generator mode, or a retarder may be engaged on a propulsion or drive shaft of the vehicle. In this mode, the vehicle's momentum is harvested to generate electricity and recharge a battery of the vehicle, accelerate a KERS etc., while simultaneously providing a retarding force that reduces a speed of the vehicle. As the driver further reduces pressure on the accelerator pedal, the (regenerative) braking effect becomes more pronounced, resulting in greater deceleration. In some vehicles, this may be adjusted to provide different levels of regenerative braking, allowing drivers to customize their driving experience.

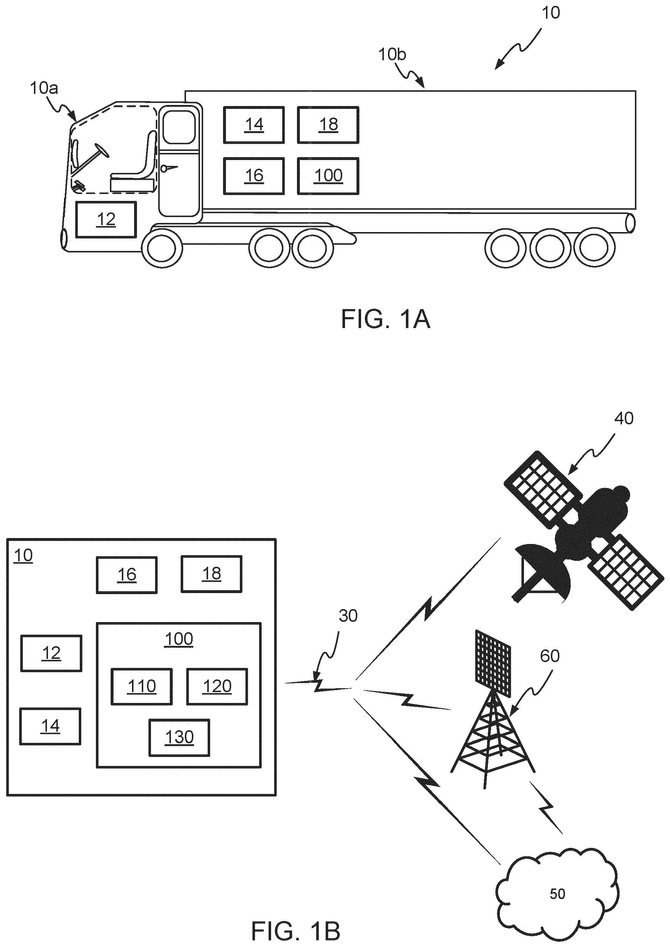

**FIG. 1A** is an exemplary schematic illustration of a heavy-duty vehicle **10** (hereinafter referred to vehicle **10** for reasons of brevity). This particular vehicle **10** comprises a tractor unit **10a** which is arranged to tow a trailer unit **10b.** In other examples, other heavy-duty vehicles may be employed, e.g., trucks, buses, and construction equipment. The vehicle **10** comprises at least one propulsion source **12** configured to propel the vehicle **10.** The propulsion source **12** may be any suitable propulsion source **12** selected depending on e.g. specific application, energy requirements, environmental considerations etc. The propulsion source **12** may be e.g. a diesel engine, a gas engine, an electrical motor, a hydrogen fuel cell or combinations thereof. Although not explicitly visualized in **FIG. 1A****,** the skilled person will appreciate that the vehicle **10** comprises all necessary vehicle units and associated functionality such that it may operate as the skilled person would expect of a vehicle **10.** Emphasis in the present disclosure is rather directed at energy efficient operation of the vehicle **10,** and in particular energy efficient one-input operation of the vehicle **10.**

The vehicle **10** in **FIG. 1A** comprises at least one operator-controlled input **14.** The operator-controlled input **14** may be any suitable input device, means, or interface exemplified by, but not limited to, a pedal, a lever, a joystick, a touch display, a motion sensor etc. Advantageously, the operator-controlled input **14** is a pedal and more advantageously an accelerator. The operator-controlled input **14** may be a driven operator-controlled input **14** such that a haptic feedback of the operator-controlled input **14** may be controlled.

The vehicle **10** in **FIG. 1A** further comprises one or more sensors **16.** The sensors **16** may be any suitable sensors configured to measure, sense or otherwise obtain data relevant for e.g. operation of the vehicle **10.** The sensors **16** may be one or more of, but are not limited to, a speedometer configured to obtain a current speed of the vehicle **10,** a fuel gauge configured to obtain a current amount fuel available at the vehicle **10,** a power meter configured to obtain a current amount of power consumed by the propulsion source **12** of the vehicle **10,** an accelerometer and/or a gyro configured to obtain a current inclination of the vehicle **10,** etc.

The vehicle **10** in **FIG. 1A** further comprises a computer system **100.** The computer system **100** is advantageously operatively connected to all suitable devices, systems and features of the vehicle **10.** The computer system **100** is configured to control the maximum and/or minimum propulsion requested by the operator-controlled input **14.** This will be further detailed in the later sections of the present disclosure.

The vehicle **10** in **FIG. 1A** may further comprises at least one communications device **18.** As is best seen in **FIG. 1B****,** the communications device **18** is advantageously configured for communication with any suitable external device, system or feature via an external communications interface **30.** In **FIG. 1B****,** the external devices are exemplified by a GPS satellite **40** which implies that the communications device **18** comprises a GPS receiver and the communications interface **30** is/comprises a GPS interface. The external devices are further exemplified by a cloud service **50** which implies that the communications interface **30** is/comprises a suitable internet interface. The cloud service **50** may be connected directly to the communications interface **30** or via the cellular base station **60.** The external devices are further exemplified by a cellular base station **60** which implies that the communications device **18** comprises a cellular modem and the communications interface **30** is/comprises a cellular network. Specific examples of the communications interface **30** comprise, but are not limited to HTTP(S), TCP/IP, UDP, FTP, SMTP, DNS, DHCP, SSH, POP3, SCP, NFS, SFTP, ICMP, ARP, RTP, RTCP IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, any form of proximity-based device-to-device radio communication, LTE Direct, W-CDMA/HSPA, GSM, UTRAN, LTE, IPv4, IPv6, 6LoWPAN, IrDA, or 5G NR. The skilled person will know how to select and configure suitable communications devices **18** based on the communications interface **30.**

The block diagram of the vehicle **10** shown in **FIG. 1B** further details the computer system **100.** The computer system **100** comprises a processing circuitry **110,** and advantageously a storage device **120** and an interface **130.** The storage device **120** may be any suitable volatile or non-volatile storage device configured to store data and/or program instructions accessible by the processing circuitry **110.** The storage device **120** and the processing circuitry **110** may form one integrated circuit (IC). The interface **130** may be configured to provide operative connection to other device, functions or systems of the vehicle **10** and/or to the communications interface **30.** In some examples, the interface **130** is, or forms a part of, the communications device **18** of the vehicle **10.**

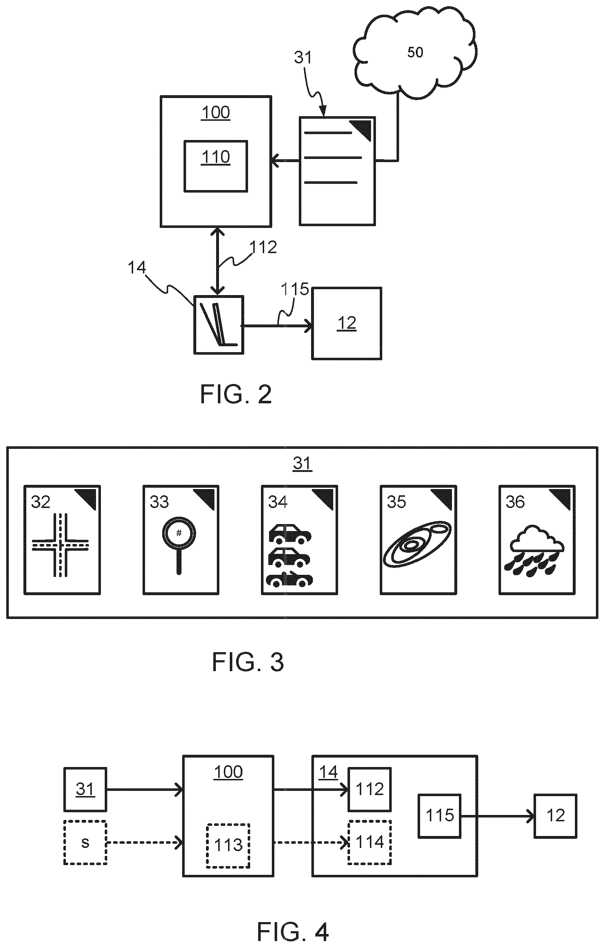

The inventors behind the present disclosure have realized that, in order to assist an operator of a vehicle **10** to propel the vehicle **10** in an eco-friendly way, the propulsion requested (indicated) by the user controlled input **14** may be controlled. To exemplify, assume that the user controlled input **14** is an accelerator configured to control the propulsion of the propulsion source **12** of the vehicle **10.** It is common knowledge that a fully depressed pedal will provide maximum propulsion torque, or propulsion for short, of the vehicle **10.** Conversely, a fully released pedal will provide the minimum propulsion of the vehicle **10.** Generally, the maximum propulsion and the minimum propulsion are determined by the propulsion source **12,** such as a drive train, etc. and the operator will have to actively adapt the depression of the pedal in order to ensure an eco-friendly behavior. However, by controlling the propulsion provided by the pedal based on eco-driving data **31** (see **FIG. 2****),** the operator may be assisted in operating the vehicle **10** in an eco-friendly manner and may be taught of how to operate the vehicle **10** in an eco-friendly manner. To exemplify, upon closing in on a stop sign, or any other road situation where it is likely that the vehicle **10** will have to stop, it would be wasted energy if the operator was to accelerate significantly as the vehicle **10** is to be stopped (braked, deaccelerated) shortly thereafter. To this end, the maximum propulsion provided by the pedal may be limited such that even upon maximally depressing (i.e. flooring) the pedal, the vehicle **10** would only accelerate a fraction of what it would have been capable of without the limitation to the propulsion provided by the pedal.

Further to this, when operating the vehicle **10** in the previously described one-pedal drive mode, a retardation torque, or retardation for short, advantageously applies regenerative retardation when the pedal is released. In continuation of the example above, upon full release of the pedal, a maximum retardation is applied. Also the retardation may be controlled such that, upon closing in on the stop sign, the maximum retardation torque may be increased allowing the vehicle **10** to smoothly come to a stop with maximum regenerative braking. Further, upon closing in on an uphill segment of a road, the maximum retardation may be decreased to reduce a need to accelerate the vehicle **10** during the uphill segment.

In the following, torque, propulsion and/or retardation, will be used as a common indicator for control of propulsion of the vehicle **10.** The methods, examples and features of the present disclosure are applicable with other indicators, labels or measures of propulsion control, such as, but not limited to power, acceleration, current to an electrical propulsion source etc.

With reference to **FIG. 2****,** an exemplary functionality of the present disclosure will be presented. The user controlled input **14** is configured to indicate a torque **115** provided to control propulsion (or retardation) of the propulsion source **12** of the vehicle **10.** In **FIG. 2****,** the user controlled input **14** is shown connected to the propulsion source **12,** this is mainly for illustrative purposes and in some examples, further control circuitry, processing or devices may be provided between the user controlled input **14** and the propulsion source **12.** The processing circuitry **110** of the computer system **100** is configured to control the torque **115** indicatable by the user controlled input **14.** In an advantageous example, the processing circuitry **110** is configured to determine a maximum propulsion torque **112** and to limit the torque indicatable by the user controlled input **14** based on the maximum propulsion torque **112.** For the present disclosure, a propulsion torque is defined as a positive torque for propelling the vehicle **10.** The maximum propulsion torque **112** may be determined as any suitable value from zero to whatever physical maximum torque limit the propulsion source **12** may provide. The term indicatable, and specifically the torque indicatable by the user controlled input **14,** is to mean a range of torque values that the user controlled input **14** is permitted to provide. That is to indicatable by may be interpreted as demonstrable by.

In order to determine the maximum propulsion torque **112,** the processing circuitry **110** is advantageously configured to obtain eco-driving data **31.** The eco-driving data **31** may be obtained from any suitable data storage, data provisioning service or device via any suitable interface. In **FIG. 2****,** the eco-driving data **31** is obtained from the cloud service **50.** The maximum propulsion torque **112** is determined based on the eco-driving data **31.**

Advantageously, the maximum propulsion torque **112** is determined to be sufficiently high to maintain a current speed s of the vehicle **10.** This may be provided by detecting if the user controlled input **14** is at its maximum position, i.e. arranged to indicate the maximum propulsion toque **112,** and responsive to the current speed s of the vehicle **10** being reduced (i.e. the vehicle **10** is slowing down), the maximum propulsion torque **112** indicatable by the user controlled input **14** may be increased. Alternatively, or additionally, a lower limit for the maximum propulsion torque **112** indicatable by the user controlled input **14** may be configured, preventing the maximum propulsion torque **112** indicatable by the user controlled input **14** dropping below the lower limit. The lower limit may be a configurable lower limit configured based on e.g. a load of the vehicle **10** etc.

In **FIG. 3****,** an exemplary block diagram of eco-driving data **31** is shown. The eco-driving data **31** comprises one or more of road layout data **32,** speed limit data **33,** traffic data **34,** topography data **35** and/or weather data **36**. The road layout data **32** may comprise data indicating intersections, stop signs, hard turns, etc. The speed limit data **33** may comprise speed limits of road segments. The traffic data **34** may comprise data indicating a current traffic situation, congestions, locations prone to congestions etc. The topography data **35** may comprise data indicating a topography of road segments, i.e. uphill, flat, downhill and/or altitude data etc. The weather data **36** may comprise data indicating current weather conditions, future weather conditions (weather forecast) etc. It should be mentioned that the eco-driving data **31** presented in **FIG. 3** are examples of eco-driving data **31** and the eco-driving data **31** should not be considered limited to these examples.

The processing circuitry **110** may be configured to use any or all of the eco-driving data **31** presented in **FIG. 3** when determining the maximum propulsion torque **112.** Advantageously, the processing circuitry **110** is configured to determine the maximum propulsion torque **112** based on at least the topography data **35.** The obtained topography data **35** is advantageously associated with a current, and/or an upcoming road segment to facilitate control of the torque **115** indicatable by the operator-controlled input **14** in an eco-driving manner.

In **FIG. 4****,** a further example of the present disclosure is shown. If **FIG. 4****,** the computer system **100** obtains eco-driving data **31** comprising at least topography data **35** of a current road segment and an upcoming road segment. The current road segment is a segment of a road on (or at if it travels on the shoulder) which the vehicle **10** is currently travelling, and the upcoming road segment is a segment of a road on (or at if it travels on the shoulder) which the vehicle **10** is about to travel. The current road segment may be any suitable length from e.g. a length of the vehicle **10** to hundreds of meters. The upcoming road segment may comprise a series of road segment or be one single road segment. The upcoming road segment may be any suitable length or comprise a series of road segments each having the same length or different lengths. The upcoming road segment may, in some examples, be determined based on route planning data. In some examples, the upcoming road segment may be determined based on the current road segment, wherein the upcoming road segment may be determined to be a, in a direction of travel, next road segment along a currently travelled road. The computer system **100,** or rather the processing circuitry **110** (not shown in **FIG. 4****),** is advantageously configured to determine a topography change **113** between the current road segment and the upcoming road segment.

The topography change **113** may be determined in any suitable way such as by calculating a difference in altitude between the current road segment and the upcoming road segment. A negative topography change **113** may indicate that the upcoming road segment has a more downhill (or less uphill) inclination than the current road segment. A positive topography change **113** may indicate that the upcoming road segment has a more uphill (or less downhill) inclination than the current road segment. A zero (unity) topography change **113** may indicate that the upcoming road segment has a substantially equal inclination as the current road segment. A substantially equal inclination may be interpreted as a substantially flat or substantially level inclination. The topography change **113** may be determined as a difference between an average altitude of the current road segment and an average altitude of the upcoming road segment. The topography change **113** may be determined as a difference between an maximum altitude of the current road segment and a maximum altitude of the upcoming road segment. The topography change **113** may be determined as a difference between a topography at an end of the current road segment and an altitude at an end of the upcoming road segment.

The computer system **100** is advantageously configured to determine a maximum propulsion torque **112** based on the topography change **113.** The determined maximum propulsion torque **112** may be utilized to limit the torque **115** indicatable by the operator-controlled input **14** of a vehicle **10.** In some examples, the torque **115** indicatable by the operator-controlled input **14** is limited to the determined maximum propulsion torque **112.**

As indicated in **FIG. 4****,** the computer system **100** may optionally be configured to determine a maximum retardation torque **114** indictable by the operator-controlled input **14** based on the topography change **113.** The determined maximum retardation torque **114** may be utilized to limit the torque **115** indicatable by the operator-controlled input **14** of the vehicle **10.** In some examples, the torque **115** indicatable by the operator-controlled input **14** is limited to the determined maximum retardation torque **114.** As the skilled person will appreciate, assuming a propulsion torque as a positive torque, the torque **115** indicatable by the operator-controlled input **14** is limited by a lower limit based on (or set to) the maximum retardation torque **114** and an upper limit based on (or set to) the maximum propulsion torque **112.** The torque **115** indicatable by the operator-controlled input **14** may be described as being between the maximum retardation torque **114** and the maximum propulsion torque **112.**

In a non-limiting explanatory example, the operator-controlled input **14** is a joystick providing an 8 bit digital value indicating a torque **115.** The 8 bits provided by the joystick may represent up to 256 values ranging from 0 to 255 and it is assumed that 255 indicates the highest torque. Based on the topography data **35,** e.g. an upcoming uphill segment, the maximum propulsion torque **112** may be determined to be 230 and the torque **115** indicatable by the joystick is limited to 230. This means the joystick in this case represents only 231 values ranging from 0 to 230.

In another non-limiting explanatory example, the operator-controlled input **14** is a joystick providing an 8 bit two's complement digital value indicating a torque **115.** The 8 bits provided by the joystick may represent up to 256 values ranging from -127 to 128 and it is assumed that 128 indicates the highest torque and -127 the highest retardation. Based on the topography data **35,** e.g. an upcoming uphill segment, the maximum propulsion torque **112** may be determined to be 117, the maximum retardation torque **114** determined to be -112 and the torque **115** indicatable by the joystick is limited to -112 and 117. This means the joystick in this case represent only values ranging from -112 to 117.

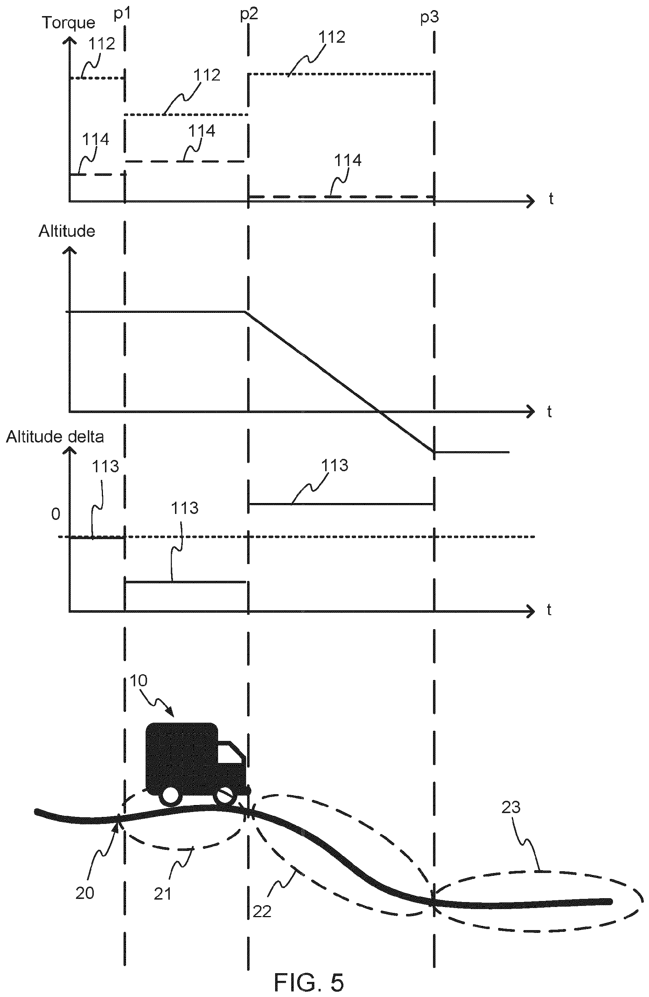

With reference to **FIG. 5****,** the teachings of the present disclosure will be explained by an exemplary scenario of a vehicle **10** traversing an uphill road segment. As seen at the bottom of **FIG. 5****,** a vehicle **10** is traveling at a road **20.** The road **20** comprises a current road segment **21** which is a segment of the road currently travelled by the vehicle **10.** The vehicle **10** is travelling in a direction towards the right side of **FIG. 1****,** and the current road segment **21** is followed by upcoming road segments **22, 23.** The upcoming road segments **22, 23** are road segments the vehicle **10** is planning to, or likely to, travel (as described above by means of route data etc.) in response to continued motion towards said upcoming road segments **22, 23.** A first upcoming road segment **22** is adjacent to and following the current road segment **21** and a second upcoming road segment **23** is adjacent to and following the first upcoming road segment **22.**

In **FIG. 5****,** the vertical dashed lines indicate specific points **p1**, **p2, p3** in time at the three top graphs and corresponding locations for the vehicle **10** along the road **20** at the bottom graph. The top graph indicates the maximum propulsion torque **112** and the maximum retardation torque **114** and how these change as the vehicle **10** travels along the road **20.** The second graph from the top indicates an altitude of the road **20** and may be obtained from the topography data **35,** or the topography data **35** may be obtained from the altitude. The second lowest graph shows the topography change **113** between the current road segment **21** and the upcoming road segment **22, 23.**

As seen in **FIG. 5****,** the difference in altitude before a first point **p1** and between the first point **p1** and a second point **p2** is substantially zero, see the topography change **113** before the first point **p1**. This means that the eco-friendly way of operating the vehicle **10** would be not to unduly change the speed of the vehicle **10.** To this end, before the first point **p1**, the maximum propulsion torque **112** is reduced i.e. less propulsion indicatable by the operator-controlled input **14** (note that a baseline for this reduction is not shown in **FIG. 5****).** At the same time, the maximum retardation torque **114** is reduced, i.e. less retardation indicatable by the operator-controlled input **14** (note that a baseline for this reduction is not shown in **FIG. 5****).**

Further, the difference in altitude before the second point **p2** (i.e. the current road segment **21)** and between the second point **p1** and a third point **p3** (i.e. the first upcoming road segment **22)** is negative, see the topography change **113** between the first point **p1** and the second point **p2.** This means that the eco-friendly way of operating the vehicle **10** would be not to accelerate the vehicle **10** unnecessarily as the downhill slope will provide energy efficient acceleration, or at least the negative topography change **113** indicates a less energy inefficient acceleration. To this end, at the first point **p1**, the maximum propulsion torque **112** is reduced, i.e. less propulsion indicatable by the operator-controlled input **14.** At the same time, the maximum retardation torque **114** is reduced, i.e. less retardation indicatable by the operator-controlled input **14.**

The difference in altitude between the first upcoming road segment **22** and the second upcoming road segment **23** indicates an uphill change of slope, i.e. an end of the downhill slope of the first upcoming road segment **22,** see the topography change **113** between the second point **p2** and a third point **p3.** This means that the eco-friendly way of operating the vehicle **10** would be to accelerate the vehicle **10** at the downhill slope as this will provide more energy efficient acceleration, or at least the positive topography change **113** indicates a less energy efficient acceleration. The downhill slope also provides better opportunity to regenerate energy compared to the second upcoming road segment **23.** To this end, at the second point **p2,** the maximum propulsion torque **112** is increased, i.e. more propulsion indicatable by the operator-controlled input **14.** At the same time, the maximum retardation torque **114** is also increased, i.e. more retardation indicatable by the operator-controlled input **14.**

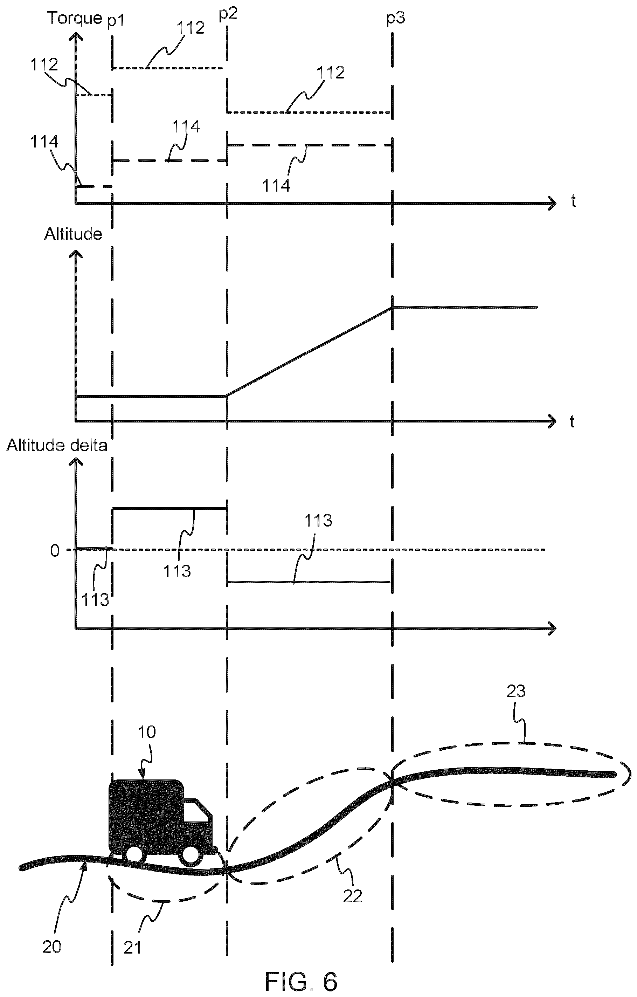

With reference to **FIG. 6****,** the teachings of the present disclosure will be explained by an exemplary scenario of a vehicle **10** traversing a downhill road segment. **FIG. 6** corresponds to **FIG. 5** in layout and order of the graphs.

As seen in **FIG. 6****,** the difference in altitude before a first point **p1** and between the first point **p1** and a second point **p2** is substantially zero, see the topography change **113** before the first point **p1**. This means that the eco-friendly way of operating the vehicle **10** would be not to unduly change the speed of the vehicle **10.** To this end, before the first point **p1**, the maximum propulsion torque **112** is reduced i.e. less propulsion indicatable by the operator-controlled input **14** (note that a baseline for this reduction is not shown in **FIG. 6****).** At the same time, the maximum retardation torque **114** is reduced, i.e. less retardation indicatable by the operator-controlled input **14** (note that a baseline for this reduction is not shown in **FIG. 6****).**

Further, the difference in altitude before the second point **p2** (i.e. the first road segment **21)** and between the second point **p1** and a third point **p3** (i.e. the first upcoming road segment **22)** is positive, see the topography change **113** between the first point **p1** and the second point **p2.** This means that the eco-friendly way of operating the vehicle **10** would be to accelerate the vehicle **10** before reaching the uphill slope, as the uphill slope will reduce the energy efficiency of acceleration. To this end, at the first point **p1**, the maximum propulsion torque **112** is increased, i.e. more propulsion indicatable by the operator-controlled input **14.** At the same time, the maximum retardation torque **114** is reduced, i.e. less retardation indicatable by the operator-controlled input **14.**

The difference in altitude between the first upcoming road segment **22** and the second upcoming road segment **23** indicates a downhill change of slope, i.e. an end of the uphill slope of the first upcoming road segment **22,** see the topography change **113** between the second point **p2** and a third point **p3.** This means that the eco-friendly way of operating the vehicle **10** would be to wait with acceleration of the vehicle **10** until the uphill slope is reduced, as the substantially horizontal topography of the second upcoming road segment **23** will provide more energy efficient acceleration. To this end, at the second point **p2,** the maximum propulsion torque **112** is decreased, i.e. less propulsion indicatable by the operator-controlled input **14.** At the same time, the maximum retardation torque **114** is also decreased, i.e. less retardation indicatable by the operator-controlled input **14.**

The examples presented with reference to **FIG. 5** and **FIG. 6** will assist an operator (driver) of the vehicle **10** to propel the vehicle **10** in an eco-friendly manner. By considering the topography of the road segments ahead, drivers are assisted in optimizing energy efficiency by reducing the energy required to be provided by the propulsion source **12** of the vehicle **10** to climb steep inclines and utilizing gravity to assist in deceleration or maintaining speed on downhill stretches. By being assisted in reducing speed before ascending a hill, drivers can conserve fuel and reduce engine strain. Similarly, drives are assisted in gaining momentum on downhill slopes and thereby reducing a need for heavy acceleration further improving fuel efficiency. The identification of e.g. downhill sections by the computer system **100** assists drivers in utilizing regenerative braking more effectively, thereby increasing energy regeneration and extending a range of the vehicle **10.**

Although not mentioned specifically in reference to the scenarios mentioned above, also a zero topography change **113** may mandate a change of the maximum propulsion torque **112** and/or the maximum retardation torque **114.** For instance, if a downhill slope continues with a same slope, the topography change **113** may be zero but it may still be advantageous to further increase the maximum propulsion torque **112** and/or the maximum retardation torque **114.**

It should be mentioned that the examples presented with reference to **FIG. 5** and **FIG. 6** are provided for explanatory purposes only and the skilled person will appreciate that e.g. the length of the different road segments **21, 22, 23** may be chosen freely. Shorter and/or different road segments **21, 22, 23** may allow the computer system **100** to be more responsive to changes in topography (or other eco-driving data **31).** Longer and/or different road segments **21, 22, 23** may involve fewer calculations of e.g. the topography change **113.** Further to this, the teachings of the present disclosure are advantageously performed continuously for an upcoming road segment **22, 23** having a predetermined or configurable length. The length may be configured based on e.g. a speed s of the vehicle **10.**

As indicated in **FIG. 3****,** the eco-driving data **31** may comprise additional or alternative data to the topography data **35.** The skilled person will appreciate that the computer system **100** may utilize any of the eco-driving data **31** in order to control the maximum propulsion torque **112** and/or the maximum retardation torque **114** indicatable by the operator-controlled input **14.** The eco-driving data **31** may be utilized in any combination in order to control the maximum propulsion torque **112** and/or the maximum retardation torque **114** indicatable by the operator-controlled input **14.**

In some examples, the computer system **100** is configured to obtain a current speed s (see **FIG. 4****)** of the vehicle **10** and speed limit data **33** of the current road segment **21.** The maximum propulsion torque **112** is advantageously determined based on a difference between the current speed s of the vehicle **10** and the speed limit **33** of the current road segment **21.** To exemplify, if the speed s of the vehicle **10** is significantly lower than the speed limit data **33,** the maximum propulsion torque **112** may be increased allowing the vehicle **10** to accelerate more quickly. If the speed s of the vehicle **10** is marginally lower than, or the same as the speed limit data **33,** the maximum propulsion torque **112** may be decreased preventing the vehicle **10** to accelerate too quickly. Similarly, the maximum retardation torque **114** is advantageously determined based on a difference between the current speed s of the vehicle **10** and the speed limit **33** of the current road segment **21.** To exemplify, if the speed s of the vehicle **10** is significantly higher than the speed limit data **33,** the maximum retardation torque **114** may be increased allowing the vehicle **10** to regeneratively brake more strongly (i.e. provide more braking torque). If the speed s of the vehicle **10** is marginally higher than or the same as the speed limit data **33,** the maximum retardation torque **114** may be decreased, thereby preventing the vehicle **10** from de-accelerating too much. The corresponding reasoning may be applied in anticipation of a change in speed limit data **33,** i.e. that a speed limit of the current road segment **21** is different from a speed limit of the upcoming road segment **22.**

In some examples, the computer system **100** is configured to obtain traffic data **34** for the upcoming road segment **22** and to determine the maximum propulsion torque **112** and/or the maximum retardation torque **114** based on the traffic data **34.** The traffic data **34** may anticipate traffic congestion and the computer system **100** may make informed decisions to avoid or minimize idling in traffic. Idling consumes fuel unnecessarily, leading to increased emissions. To exemplify, if the traffic data **34** for the upcoming road segment **22** indicate a traffic congestion, the maximum propulsion torque **112** may be decreased and/or the maximum retardation torque **114** may be increased as it is likely that the congestion will force a speed reduction.

In some examples, the computer system **100** is configured to obtain road layout data **32** for the upcoming road segment **22** and to determine the maximum propulsion torque **112** and/or the maximum retardation torque **114** based on the road layout data **32.** The road layout data **32** advantageously comprises, as the name suggests, data relating to a layout of the road and may comprise e.g. indications of roundabouts, crossings, sharp turns etc. To exemplify, if the road layout data **32** for the upcoming road segment **22** indicate a sharp turn, it is likely that a speed of the vehicle **10** should be reduced before entering the sharp turn. To this end, the maximum propulsion torque **112** may be decreased and/or the maximum retardation torque **114** may be increased to assist the driver in driving eco-friendly.

In some examples, the computer system **100** is configured to obtain weather data **36.** The weather data **36** may indicate temperatures, a risk of rain, wind (direction and/or strength) etc. The temperatures (optionally in combination with e.g. topography data **35** or rain) may be utilized to estimate if there is a risk for an icy or otherwise slippery road (aquaplaning) which may result in a too high propulsion or retardation torque **112, 114** causing the vehicle **10** to slip. This implies that that the maximum propulsion torque **112** and/or the maximum retardation torque **114** may be decreased in response to determining that the upcoming road segment **22** (or the current road segment **21)** may be slippery. The wind may be utilized in accordance with the topography data **35,** that is to say, in anticipation of an upcoming head wind (e.g. the road makes a turn into the wind), this may be compared to an uphill topography change **113.** In this case, it would be more energy efficient to accelerate the vehicle **10** at a current road segment **21** with a side wind. That is to say, the maximum propulsion torque **112** is advantageously increased at the current road segment **21** (decreased at the upcoming road segment **22)** and/or the maximum retardation torque **114** is advantageously decreased at the current road segment **21** (increased at the upcoming road segment **22).** Similarly, if an upcoming road segment **22** will offer a wind at the back of the vehicle **10,** this may be compared to a downhill topography change **113.** In this case, it would be more energy efficient to delay acceleration of the vehicle **10** until the upcoming road segment **22** is reached. That is to say, the maximum propulsion torque **112** is advantageously decreased at the current road segment **21** (increased at the upcoming road segment **22)** and/or the maximum retardation torque **114** is advantageously decreased at the current road segment **21** (increased at the upcoming road segment **22).**

As mentioned, all the exemplified data utilized to control the maximum propulsion torque **112** and/or the maximum retardation torque **114** may be implemented stand-alone or freely combined with each other. If combined, the respective changes (increase or decrease) determined based on the respective eco-driving data **31,** are advantageously weighted together to determine the maximum propulsion torque **112** and/or the maximum retardation torque **114** indicatable by the operator-controlled input **14.** It should be mentioned that an amount of change, i.e. an amount of increase and decrease of the maximum propulsion torque **112** and/or the maximum retardation torque **114** is/are advantageously weighted by the associated eco-driving data **31.** To exemplify, if an upcoming steep downhill segment is indicated by the topography change **113,** the amount of decrease of the maximum propulsion torque **112** is advantageously higher than the amount of decrease of the maximum propulsion torque **112** if a less steep upcoming downhill segment is indicated by the topography change **113.**

It should further be mentioned that when referring to the relative changes, i.e. increasing or decreasing of the maximum propulsion torque **112** and/or the maximum retardation torque **114,** this implies a change from a current value. In some examples, the change of the maximum propulsion torque **112** and/or the maximum retardation torque **114** may comprise setting the maximum propulsion torque **112** and/or the maximum retardation torque **114** at a predefined, configurable or determined value. The predefined, configurable or determined value may be selected based on e.g. the eco-driving data **31.**

The examples, features and teachings of the present disclosure have to this point mainly been described with reference to a computer system **100.** The computer system **100** may, as mentioned, be comprised in a vehicle **10.** This is but one exemplary implementation of the teachings of the present disclosure. The features, examples and options presented herein may be implemented in numerous different devices or methods.

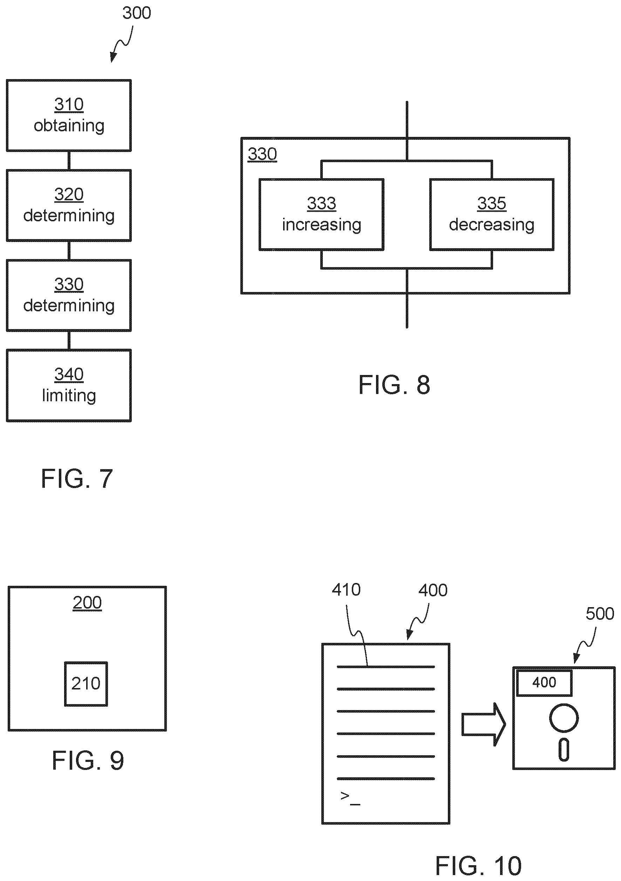

With reference to **FIG. 7****,** a method **300** of the present disclosure will be presented. The method **300** is advantageously a computer implemented method **300** that may be expanded, modified or altered to comprise any or all features, examples or options presented herein.

As seen in the example of **FIG. 7****,** the method **300** comprises obtaining **310** topography data **35** of the current road segment **21** and the upcoming road segment **22.** The topography data **35** may be any topography data **35** presented herein and may be obtained by any suitable circuit, device or function presented herein. Advantageously, the topography data **35** is obtained by the processing circuitry **110** of the computer system **100.**

The method **300** further comprises determining **320** the topography change **113** between the current road segment **21** and the upcoming road segment **22.** The topography change **113** may be determined by any suitable circuit, device or function presented herein. Advantageously, the topography change **114** is determined by the processing circuitry **110** of the computer system **100.**

The method **300** further comprises determining **330** the maximum propulsion torque **112** and/or retardation torque **114** based on the topography change **113.** The maximum propulsion torque **112** and/or the maximum retardation torque **114** may be determined by any suitable circuit, device or function presented herein. Advantageously, the maximum propulsion torque **112** and/or the maximum retardation torque **114** is determined by the processing circuitry 110 of the computer system **100.**

The method **300** further comprises limiting **340** the torque **115** indicatable by the operator-controlled input **14** of the vehicle **10** based on the maximum propulsion torque **112** and/or retardation torque **114.** The limitation of the maximum propulsion torque **112** and/or the maximum retardation torque **114** may be provided by any suitable circuit, device or function presented herein. Advantageously, the limitation of the maximum propulsion torque **112** and/or the maximum retardation torque **114** is provided by the processing circuitry **110** of the computer system **100.**

In **FIG. 8** some further optional details of determining **330** the maximum propulsion torque **112** and/or retardation torque **114** based on the topography change **113** is shown. The method **300** may additionally, or alternatively, comprise increasing **333** the maximum propulsion torque **112** based on the topography change **113** and/or any other eco-driving data **31** presented herein. The method **300** may additionally, or alternatively, comprise decreasing **335** the maximum propulsion torque **112** based on the topography change **113** and/or any other eco-driving data **31** presented herein. The method **300** may additionally, or alternatively, comprise increasing **333** the maximum retardation torque **114** based on the topography change **113** and/or any other eco-driving data **31** presented herein. The method **300** may additionally, or alternatively, comprise decreasing **335** the maximum retardation torque **114** based on the topography change **113** and/or any other eco-driving data **31** presented herein. The increasing **333** and/or the decreasing **335** may be provided by any suitable circuit, device or function presented herein. Advantageously, the increasing **333** and/or the decreasing **335** is provided by the processing circuitry **110** of the computer system 100.

In **FIG. 9****,** a block diagram of a pedal drive circuitry **200** is shown. The pedal drive circuitry **200** is configured for controlling the torque **115** indicatable by the operator-controlled input **14** of the vehicle **10.** The pedal drive circuitry **200** comprises a processing circuitry **210** that may be the processing circuitry **110** of the computer system **100.** The processing circuitry **210** is configured to cause obtaining of topography data **35** of the current road segment **21** and the upcoming road segment **22.** The processing circuitry **210** is further configured to cause determining of the topography change **113** between the current road segment **21** and the upcoming road segment **22.** In addition to this, the processing circuitry **210** is configured to cause determining of the maximum propulsion torque **112** and/or the maximum retardation torque **114** based on the topography change **113** and limiting of the torque **115** indicatable by the operator-controlled input **14** based on the maximum propulsion torque **112** and/or the maximum retardation torque **114.**

The pedal drive circuitry **200** may further be configured to cause the provisioning of any further feature or example mentioned herein, specifically in reference to the computer system **100.**

In some examples, the pedal drive circuitry **200** is configured to cause execution of the method **300** presented in reference to **FIG. 7** and **FIG. 8****.**

In **FIG. 10** a computer readable storage medium **500** is shown. The computer readable storage medium **500** is illustrated as a vintage 5,25" floppy drive but may be any suitable volatile or advantageously non-transitory (non-volatile) computer readable storage medium exemplified by, but not limited to, a Hard Disk Drive (HDD), a Solid State Drive (SSD), an USB Flash Drives, a memory card (such as Secure Digital (SD) cards, CompactFlash (CF) cards), an optical disc (such as CD (Compact Disc), DVD (Digital Versatile Disc), and Blu-ray Disc) or a magnetic tape. The computer readable storage medium **500** comprises (stores, having stored thereon) a computer program product **400** (computer program) comprising computer code **410** (program code, program instructions, instructions). When the computer readable storage medium **500** is loaded and executed by a processing circuitry **110, 210,** the processing circuitry **110, 210** performs, or causes the performance or the method **300** described with reference to **FIG. 7** and **FIG. 8****.**

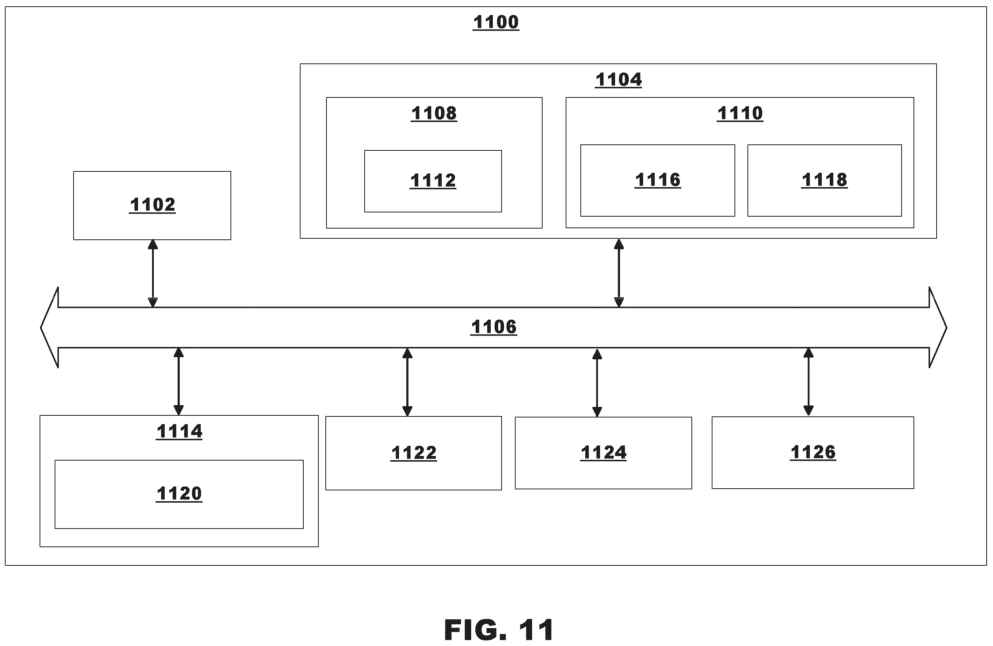

**FIG. 11** is a schematic diagram of a computer system **1100** for implementing examples disclosed herein. The computer system **1100** of **FIG. 11** may be the computer system **100** previously presented herein. The computer system **1100** is adapted to execute instructions from a computer-readable medium to perform these and/or any of the functions or processing described herein. The computer system **1100** may be connected (e.g., networked) to other machines in a LAN, an intranet, an extranet, or the Internet. While only a single device is illustrated, the computer system **1100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1100** may comprise at least one computing device or electronic device capable of including firmware, hardware, and/or executing software instructions to implement the functionality described herein. The computer system **1100** may include processing circuitry **1102** (e.g., processing circuitry including one or more processor devices or control units), a memory **1104,** and a system bus **1106.** The processing circuitry **1102** may be the processing circuitry **110** previously presented herein. The computer system **1100** may be the computer system **100** previously presented herein. The computer system **1100** may include at least one computing device having the processing circuitry **1102.** The system bus **1106** provides an interface for system components including, but not limited to, the memory **1104** and the processing circuitry **1102.** The processing circuitry **1102** may include any number of hardware components for conducting data or signal processing or for executing computer code stored in memory **1104.** The processing circuitry **1102** may, for example, include a general-purpose processor, an application specific processor, a Digital Signal Processor (DSP), an Application Specific Integrated Circuitry (ASIC), a Field Programmable Gate Array (FPGA), a circuitry containing processing components, a group of distributed processing components, a group of distributed computers configured for processing, or other programmable logic device, discrete gate or transistor logic, discrete hardware components, or any combination thereof designed to perform the functions described herein. The processing circuitry **1102** may further include computer executable code that controls operation of the programmable device.

The system bus **1106** may be any of several types of bus structures that may further interconnect to a memory bus (with or without a memory controller), a peripheral bus, and/or a local bus using any of a variety of bus architectures. The memory **1104** may be one or more devices for storing data and/or computer code for completing or facilitating methods described herein. The memory **1104** may include database components, object code components, script components, or other types of information structure for supporting the various activities herein. Any distributed or local memory device may be utilized with the systems and methods of this description. The memory **1104** may be communicably connected to the processing circuitry **1102** (e.g., via a circuitry or any other wired, wireless, or network connection) and may include computer code for executing one or more processes described herein. The memory **1104** may include non-volatile memory **1108** (e.g., read-only memory (ROM), erasable programmable read-only memory (EPROM), electrically erasable programmable read-only memory (EEPROM), etc.), and volatile memory 1110 (e.g., random-access memory (RAM)), or any other medium which can be used to carry or store desired program code in the form of machine-executable instructions or data structures and which can be accessed by a computer or other machine with processing circuitry **1102.** A basic input/output system (BIOS) **1112** may be stored in the non-volatile memory **1108** and can include the basic routines that help to transfer information between elements within the computer system **1100.**

The computer system **1100** may further include or be coupled to a non-transitory computer-readable storage medium such as the storage device **1114,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1114** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1114** and/or in the volatile memory **1110,** which may include an operating system **1116** and/or one or more program modules **1118.** All or a portion of the examples disclosed herein may be implemented as a computer program **1120** stored on a transitory or non-transitory computer-usable or computer-readable storage medium (e.g., single medium or multiple media), such as the storage device **1114,** which includes complex programming instructions (e.g., complex computer-readable program code) to cause the processing circuitry **1102** to carry out actions described herein. Thus, the computer-readable program code of the computer program **1120** can comprise software instructions for implementing the functionality of the examples described herein when executed by the processing circuitry **1102.** In some examples, the storage device **1114** may be a computer program product (e.g., readable storage medium) storing the computer program **1120** thereon, where at least a portion of a computer program **1120** may be loadable (e.g., into a processor) for implementing the functionality of the examples described herein when executed by the processing circuitry **1102.** The processing circuitry **1102** may serve as a controller or control system for the computer system **1100** that is to implement the functionality described herein.

The computer system **1100** may include an input device interface **1122** configured to receive input and selections to be communicated to the computer system **1100** when executing instructions, such as from a keyboard, mouse, touch-sensitive surface, etc. Such input devices may be connected to the processing circuitry **1102** through the input device interface **1122** coupled to the system bus **1106** but can be connected through other interfaces, such as a parallel port, an Institute of Electrical and Electronic Engineers (IEEE) 1394 serial port, a Universal Serial Bus (USB) port, an IR interface, and the like. The computer system **1100** may include an output device interface **1124** configured to forward output, such as to a display, a video display unit (e.g., a liquid crystal display (LCD) or a cathode ray tube (CRT)). The computer system **1100** may include a communications interface **1126** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The invention of the present disclosure is defined by the independent claims. Preferred embodiments are defined by the dependent claims.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure as defined by the appended claims. In the drawings and specification, there have been disclosed aspects for purposes of illustration only and not for purposes of limitation, the scope of the disclosure being set forth in the following claims.

## Claims

1. A computer system (100) comprising processing circuitry (110) configured to:
obtain topography data (35) of a current road segment (21) and an upcoming road segment (22, 23);
determine a topography change (113) between the current road segment (21) and the upcoming road segment (22, 23);
determine a maximum propulsion torque (112) based on the topography change (113); and
limit, at the current road segment (21), a torque (115) indicatable by an operator-controlled input (14) of a vehicle (10) based on the maximum propulsion torque (112).

2. The computer system (100) of claim 1, wherein the processing circuitry (110) is further configured to:
responsive to the topography change (113) indicating an uphill change in topography, increase the maximum propulsion torque (112); and
responsive to the topography change (113) indicating a downhill change in topography, decrease the maximum propulsion torque (112).

3. The computer system (100) of claim 1 or 2, wherein the processing circuitry (110) is further configured to:
determine a maximum retardation torque (114) based on the topography change (113); and
limit, at the current road segment (21), the torque (115) indicatable by the operator-controlled input (14) of the vehicle (10) based on the maximum retardation torque (114).

4. The computer system (100) of claim 3, wherein the processing circuitry (110) is further configured to:
responsive to the topography change (113) indicating an uphill change in topography, decrease the maximum retardation torque (114); and
responsive to the topography change (113) indicating a downhill change in topography, increase the maximum retardation torque (114).

5. The computer system (100) of any one of claims 1 to 4, wherein the processing circuitry (110) is further configured to:
obtain a current speed (s) of the vehicle (10) and a speed limit (33) of the current road segment (21); and
determine the maximum propulsion torque (112) based on a difference between the current speed (s) of the vehicle (10) and the speed limit (33) of the current road segment (21).

6. The computer system (100) of any one of claims 1 to 5, wherein the operator-controlled input (14) is a pedal of the vehicle (10), preferably an accelerator of the vehicle (10).

7. The computer system (100) of any one of claims 1 to 6, wherein the processing circuitry (110) is further configured to limit the torque (115) indicatable by the operator-controlled input (14) by controlling a haptic feedback of the operator-controlled input (14).

8. The computer system (100) of claim 1, wherein the processing circuitry (110) is further configured to:
responsive to the topography change (113) indicating an uphill change in topography, increase the maximum propulsion torque (112);
responsive to the topography change (113) indicating a downhill change in topography, decrease the maximum propulsion torque (112);
determine a maximum retardation torque (114) based on the topography change (113);
limit, at the current road segment (21), the torque (115) indicatable by the operator-controlled input (14) of the vehicle (10) based on the maximum retardation torque (114);
responsive to the topography change (113) indicating an uphill change in topography, decrease the maximum retardation torque (114);
responsive to the topography change (113) indicating a downhill change in topography, increase the maximum retardation torque (114);
obtain a current speed (s) of the vehicle (10) and a speed limit (33) of the current road segment (21);
determine the maximum propulsion torque (112) based on a difference between the current speed (s) of the vehicle (10) and the speed limit (33) of the current road segment (21); and
limit, at the current road segment (21), the torque (115) indicatable by the operator-controlled input (14) by controlling a haptic feedback of the operator-controlled input (14);
wherein the operator-controlled input (14) is a pedal of the vehicle (10), preferably an accelerator of the vehicle (10).

9. A vehicle (10) comprising the computer system (100) of any one of claims 1-8.

10. A computer implemented method (300) comprising:
obtaining (310), by processing circuitry (110) of a computer system (100), topography data (35) of a current road segment (21) and an upcoming road segment (22, 23);
determining (320), by the processing circuitry (110) of the computer system (100), a topography change (113) between the current road segment (21) and the upcoming road segment (22, 23);
determining (330), by the processing circuitry (110) of the computer system (100), a maximum propulsion torque (112) based on the topography change (113); and
limiting (340), at the current road segment (21), by the processing circuitry (110) of the computer system (100), a torque (115) indicatable by an operator-controlled input (14) of a vehicle (10) based on the maximum propulsion torque (112).

11. The computer implemented method (300) of claim 10, further comprising:
responsive to the topography change (113) indicating an uphill change in topography, increasing (333), by the processing circuitry (110) of the computer system (100), the maximum propulsion torque (112); and
responsive to the topography change (113) indicating a downhill change in topography, decreasing (335), by the processing circuitry (110) of the computer system (100), the maximum propulsion torque (112).

12. The computer implemented method (300) of claim 10 or 11, further comprising:
determining (330), by the processing circuitry (110) of the computer system (100), a maximum retardation torque (114) based on the topography change (113); and
limiting (340), at the current road segment (21), by the processing circuitry (110) of the computer system (100), the torque (115) indicatable by the operator-controlled input (14) of the vehicle (10) based on the maximum retardation torque (114).

13. The computer implemented method (300) of claim 12, further comprising:
responsive to the topography change (113) indicating an uphill change in topography, decreasing (335), by the processing circuitry (110) of the computer system (100), the maximum retardation torque (114); and
responsive to the topography change (113) indicating a downhill change in topography, increasing (333), by the processing circuitry (110) of the computer system (100), the maximum retardation torque (114).

14. A computer program product (400) comprising instructions (410) for performing, when executed by the processing circuitry (110), the method (300) of any of claims 10-13.

15. A non-transitory computer-readable storage medium (500) comprising instructions (410), which when executed by the processing circuitry (110), cause the processing circuitry (110) to perform the method (300) of any of claims 10-13.

## Patentansprüche

1. Computersystem (100), umfassend Verarbeitungsschaltung (110) die zu Folgendem konfiguriert ist:
Erlangen von Topographiedaten (35) eines aktuellen Straßenabschnitts (21) und eines vorausliegenden Straßenabschnitts (22, 23);
Bestimmen einer Topographieänderung (113) zwischen dem aktuellen Straßenabschnitt (21) und dem vorausliegenden Straßenabschnitt (22, 23);
Bestimmen eines maximalen Antriebsdrehmoments (112) basierend auf der Topographieänderung (113); und
Begrenzen, auf dem aktuellen Straßenabschnitt (21), eines durch einen bedienergesteuerten Eingang (14) des Fahrzeugs (10) anzeigbaren Drehmoments (115) basierend auf dem maximalen Antriebsmoment (112).

2. Computersystem (100) nach Anspruch 1, wobei die Verarbeitungsschaltung (110) ferner zu Folgendem konfiguriert ist:
als Reaktion auf die Topographieänderung (113), die eine Änderung bergaufwärts der Topographie angibt, Erhöhen des maximalen Antriebsmoments (112); und
als Reaktion auf die Topographieänderung (113), die eine Änderung bergabwärts der Topographie angibt, Verringern des maximalen Antriebsmoments (112).

3. Computersystem (100) nach Anspruch 1 oder 2, wobei die Verarbeitungsschaltung (110) ferner zu Folgendem konfiguriert ist:
Bestimmen eines maximalen Verzögerungsmoments (114) basierend auf der Topographieänderung (113); und
Begrenzen, auf dem aktuellen Straßenabschnitt (21), des durch den bedienergesteuerten Eingang (14) des Fahrzeugs (10) anzeigbaren Drehmoments (115) basierend auf dem maximalen Verzögerungsmoment (114).

4. Computersystem (100) nach Anspruch 3, wobei die Verarbeitungsschaltung (110) ferner zu Folgendem konfiguriert ist:
als Reaktion auf die Topographieänderung (113), die eine Änderung bergaufwärts der Topographie angibt, Verringern des maximalen Verzögerungsmoments (114); und
als Reaktion auf die Topographieänderung (113), die eine Änderung bergabwärts der Topographie angibt, Erhöhen des maximalen Verzögerungsmoments (114).

5. Computersystem (100) nach einem der Ansprüche 1 bis 4, wobei die Verarbeitungsschaltung (110) ferner zu Folgendem konfiguriert ist:
Erlangen einer aktuellen Geschwindigkeit (s) des Fahrzeugs (10) und einer Geschwindigkeitsbegrenzung (33) des aktuellen Straßenabschnitts (21); und
Bestimmen des maximalen Antriebsmoments (112) basierend auf einer Differenz zwischen der aktuellen Geschwindigkeit (s) des Fahrzeugs (10) und der Geschwindigkeitsbegrenzung (33) des aktuellen Straßenabschnitts (21).

6. Computersystem (100) nach einem der Ansprüche 1 bis 5, wobei der bedienergesteuerte Eingang (14) ein Pedal des Fahrzeugs (10), vorzugsweise ein Gaspedal des Fahrzeugs (10), ist.

7. Computersystem (100) nach einem der Ansprüche 1 bis 6, wobei die Verarbeitungsschaltung (110) ferner konfiguriert ist, um das durch den bedienergesteuerten Eingang (14) anzeigbare Drehmoment (115) durch Steuern einer haptischen Rückmeldung des bedienergesteuerten Eingangs (14) zu begrenzen.

8. Computersystem (100) nach Anspruch 1, wobei die Verarbeitungsschaltung (110) ferner zu Folgendem konfiguriert ist:
als Reaktion auf die Topographieänderung (113), die eine Änderung bergaufwärts der Topographie anzeigt, Erhöhen des maximalen Antriebsmoments (112);
als Reaktion auf die Topographieänderung (113), die eine Änderung bergabwärts der Topographie angibt, Verringern des maximalen Antriebsmoments (112);
Bestimmen eines maximalen Verzögerungsmoments (114) basierend auf der Topographieänderung (113);
Begrenzen, auf dem aktuellen Straßenabschnitt (21), des durch den bedienergesteuerten Eingang (14) des Fahrzeugs (10) anzeigbaren Drehmoments (115) basierend auf dem maximalen Verzögerungsmoment (114);
als Reaktion auf die Topographieänderung (113), die eine Änderung bergaufwärts der Topographie angibt, Verringern des maximalen Verzögerungsmoments (114);
als Reaktion auf die Topographieänderung (113), die eine Änderung bergabwärts der Topographie angibt, Erhöhen des maximalen Verzögerungsmoments (114);
Erlangen einer aktuellen Geschwindigkeit (s) des Fahrzeugs (10) und einer Geschwindigkeitsbegrenzung (33) des aktuellen Straßenabschnitts (21);
Bestimmen des maximalen Antriebsmoments (112) basierend auf einer Differenz zwischen der aktuellen Geschwindigkeit (s) des Fahrzeugs (10) und der Geschwindigkeitsbegrenzung (33) des aktuellen Straßenabschnitts (21); und
Begrenzen, auf dem aktuellen Straßenabschnitt (21), des durch den bedienergesteuerten Eingang (14) anzeigbaren Drehmoments (115) durch Steuern einer haptischen Rückmeldung des bedienergesteuerten Eingangs (14);
wobei der bedienergesteuerte Eingang (14) ein Pedal des Fahrzeugs (10), vorzugsweise ein Gaspedal des Fahrzeugs (10), ist.

9. Fahrzeug (10), umfassend das Computersystem (100) nach einem der Ansprüche 1-8.

10. Computerimplementiertes Verfahren (300), umfassend:
Erlangen (310), durch eine Verarbeitungsschaltung (110) eines Computersystems (100), von Topographiedaten (35) eines aktuellen Straßenabschnitts (21) und eines vorausliegenden Straßenabschnitts (22, 23);
Bestimmen (320), durch die Verarbeitungsschaltung (110) des Computersystems (100), einer Topographieänderung (113) zwischen dem aktuellen Straßenabschnitt (21) und dem vorausliegenden Straßenabschnitt (22, 23);
Bestimmen (330), durch die Verarbeitungsschaltung (110) des Computersystems (100), eines maximalen Antriebsdrehmoments (112) basierend auf der Topographieänderung (113); und
Begrenzen (340), auf dem aktuellen Straßenabschnitt (21), durch die Verarbeitungsschaltung (110) des Computersystems (100), eines durch einen bedienergesteuerten Eingang (14) eines Fahrzeugs (10) anzeigbaren Drehmoments (115) basierend auf dem maximalen Antriebsdrehmoment (112).

11. Computerimplementiertes Verfahren (300) nach Anspruch 10, ferner umfassend:
als Reaktion auf die Topographieänderung (113), die eine Änderung bergaufwärts der Topographie angibt, Erhöhen (333), durch die Verarbeitungsschaltung (110) des Computersystems (100), des maximalen Antriebsdrehmoments (112); und
als Reaktion auf die Topographieänderung (113), die eine Änderung bergabwärts der Topographie angibt, Verringern (335), durch die Verarbeitungsschaltung (110) des Computersystems (100), des maximalen Antriebsdrehmoments (112).

12. Computerimplementiertes Verfahren (300) nach Anspruch 10 oder 11, ferner umfassend:
Bestimmen (330), durch die Verarbeitungsschaltung (110) des Computersystems (100), eines maximalen Verzögerungsmoments (114) basierend auf der Topographieänderung (113); und
Begrenzen (340), auf dem aktuellen Straßenabschnitt (21), durch die Verarbeitungsschaltung (110) des Computersystems (100), des durch den bedienergesteuerten Eingang (14) des Fahrzeugs (10) anzeigbaren Drehmoments (115) basierend auf dem maximalen Verzögerungsmoment (114).

13. Computerimplementiertes Verfahren (300) nach Anspruch 12, ferner umfassend:
als Reaktion auf die Topographieänderung (113), die eine Änderung bergaufwärts der Topographie angibt, Verringern (335), durch die Verarbeitungsschaltung (110) des Computersystems (100), des maximalen Verzögerungsmoments (114); und
als Reaktion auf die Topographieänderung (113), die eine Änderung bergabwärts der Topographie angibt, Erhöhen (333), durch die Verarbeitungsschaltung (110) des Computersystems (100), des maximalen Verzögerungsmoments (114).

14. Computerprogrammprodukt (400), umfassend Programmcode (410) zum Durchführen des Verfahrens (300) nach einem der Ansprüche 10-13, wenn er durch eine Verarbeitungsschaltung (110) ausgeführt wird.

15. Nicht-transitorisches, computerlesbares Speichermedium (500), umfassend Anweisungen (410), die, wenn sie von der Verarbeitungsschaltung (110) ausgeführt werden, die Verarbeitungsschaltung (110) veranlassen, das Verfahren (300) nach einem der Ansprüche 10-13 durchzuführen.

## Revendications

1. Système informatique (100) comprenant un circuit de traitement (110) configuré pour :
obtenir des données topographiques (35) d'un segment de route actuel (21) et d'un segment de route à venir (22, 23) ;
déterminer un changement de topographie (113) entre le segment de route actuel (21) et le segment de route à venir (22, 23) ;
déterminer un couple de propulsion maximal (112) en fonction du changement de topographie (113) ; et
limiter, sur le segment de route actuel (21), un couple (115) pouvant être indiqué par une entrée commandée par l'opérateur (14) d'un véhicule (10) sur la base du couple de propulsion maximal (112).

2. Système informatique (100) selon la revendication 1, dans lequel le circuit de traitement (110) est en outre configuré pour :
en réponse au changement de topographie (113) indiquant un changement de topographie en montée, augmenter le couple de propulsion maximal (112) ; et
en réponse au changement de topographie (113) indiquant un changement de topographie en descente, diminuer le couple de propulsion maximal (112).

3. Système informatique (100) selon la revendication 1 ou 2, dans lequel le circuit de traitement (110) est en outre configuré pour :
déterminer un couple de ralentissement maximal (114) en fonction du changement de topographie (113) ; et
limiter, sur le segment de route actuel (21), le couple (115) pouvant être indiqué par l'entrée commandée par l'opérateur (14) du véhicule (10) sur la base du couple de ralentissement maximal (114).

4. Système informatique (100) selon la revendication 3, dans lequel le circuit de traitement (110) est en outre configuré pour :
en réponse au changement de topographie (113) indiquant un changement de topographie en montée, diminuer le couple de ralentissement maximal (114) ; et
en réponse au changement de topographie (113) indiquant un changement de topographie en descente, augmenter le couple de ralentissement maximal (114).

5. Système informatique (100) selon l'une quelconque des revendications 1 à 4, dans lequel le circuit de traitement (110) est en outre configuré pour :
obtenir une vitesse actuelle (s) du véhicule (10) et une limitation de vitesse (33) du segment de route actuel (21) ; et
déterminer le couple de propulsion maximal (112) sur la base d'une différence entre la vitesse actuelle (s) du véhicule (10) et la limitation de vitesse (33) du segment de route actuel (21).

6. Système informatique (100) selon l'une quelconque des revendications 1 à 5, dans lequel l'entrée commandée par l'opérateur (14) est une pédale du véhicule (10), de préférence un accélérateur du véhicule (10).

7. Système informatique (100) selon l'une quelconque des revendications 1 à 6, dans lequel le circuit de traitement (110) est en outre configuré pour limiter le couple (115) pouvant être indiqué par l'entrée commandée par l'opérateur (14) en commandant un retour haptique de l'entrée commandée par l'opérateur (14).

8. Système informatique (100) selon la revendication 1, dans lequel le circuit de traitement (110) est en outre configuré pour :
en réponse au changement de topographie (113) indiquant un changement de topographie en montée, augmenter le couple de propulsion maximal (112) ;
en réponse au changement de topographie (113) indiquant un changement de topographie en descente, diminuer le couple de propulsion maximal (112) ;
déterminer un couple de ralentissement maximal (114) en fonction du changement de topographie (113) ;
limiter, sur le segment de route actuel (21), le couple (115) pouvant être indiqué par l'entrée commandée par l'opérateur (14) du véhicule (10) sur la base du couple de ralentissement maximal (114) ;
en réponse au changement de topographie (113) indiquant un changement de topographie en montée, diminuer le couple de ralentissement maximal (114) ;
en réponse au changement de topographie (113) indiquant un changement de topographie en descente, augmenter le couple de ralentissement maximal (114) ;
obtenir une vitesse actuelle (s) du véhicule (10) et une limitation de vitesse (33) du segment de route actuel (21) ;
déterminer le couple de propulsion maximal (112) sur la base d'une différence entre la vitesse actuelle (s) du véhicule (10) et la limitation de vitesse (33) du segment de route actuel (21) ; et
limiter, sur le segment de route actuel (21), le couple (115) pouvant être indiqué par l'entrée commandée par l'opérateur (14) en commandant un retour haptique de l'entrée commandée par l'opérateur (14) ;
dans lequel l'entrée commandée par l'opérateur (14) est une pédale du véhicule (10), de préférence un accélérateur du véhicule (10).

9. Véhicule (10), comprenant le système informatique (100) selon l'une quelconque des revendications 1 à 8.

10. Procédé mis en œuvre par ordinateur (300) comprenant :
l'obtention (310), par le circuit de traitement (110) d'un système informatique (100), de données topographiques (35) d'un segment de route actuel (21) et d'un segment de route à venir (22, 23) ;
la détermination (320), par le circuit de traitement (110) du système informatique (100), d'un changement de topographie (113) entre le segment de route actuel (21) et le segment de route à venir (22, 23) ;
la détermination (330), par le circuit de traitement (110) du système informatique (100), d'un couple de propulsion maximal (112) en fonction du changement de topographie (113) ; et
la limitation (340), sur le segment de route actuel (21), par le circuit de traitement (110) du système informatique (100), d'un couple (115) pouvant être indiqué par une entrée commandée par l'opérateur (14) d'un véhicule (10) sur la base du couple de propulsion maximal (112).

11. Procédé mis en œuvre par ordinateur (300) selon la revendication 10, comprenant en outre :
en réponse au changement de topographie (113) indiquant un changement de topographie en montée, l'augmentation (333), par le circuit de traitement (110) du système informatique (100), du couple de propulsion maximal (112) ; et
en réponse au changement de topographie (113) indiquant un changement de topographie en descente, la diminution (335), par le circuit de traitement (110) du système informatique (100), du couple de propulsion maximal (112).

12. Procédé mis en œuvre par ordinateur (300) selon la revendication 10 ou 11, comprenant en outre :
la détermination (330), par le circuit de traitement (110) du système informatique (100), d'un couple de ralentissement maximal (114) en fonction du changement de topographie (113) ; et
la limitation (340), sur le segment de route actuel (21), par le circuit de traitement (110) du système informatique (100), du couple (115) pouvant être indiqué par l'entrée commandée par l'opérateur (14) du véhicule (10) sur la base du couple de ralentissement maximal (114).

13. Procédé mis en œuvre par ordinateur (300) selon la revendication 12, comprenant en outre :
en réponse au changement de topographie (113) indiquant un changement de topographie en montée, la diminution (335), par le circuit de traitement (110) du système informatique (100), du couple de ralentissement maximal (114) ; et
en réponse au changement de topographie (113) indiquant un changement de topographie en descente, l'augmentation (333), par le circuit de traitement (110) du système informatique (100), du couple de ralentissement maximal (114).

14. Produit de programme informatique (400) comprenant des instructions (410) pour réaliser, lorsqu'elles sont exécutées par le circuit de traitement (110), le procédé (300) selon l'une quelconque des revendications 10 à 13.

15. Support de stockage non transitoire lisible par ordinateur (500) comprenant des instructions (410) qui, lorsqu'elles sont exécutées par le circuit de traitement (110), amènent le circuit de traitement (110) à réaliser le procédé (300) selon l'une quelconque des revendications 10 à 13.
